# EUROPEAN PATENT SPECIFICATION

(11) **EP 0 692 909 B1**
(45) Date of publication and mention of the grant of the patent: **28.11.2001**
(21) Application number: 95110312.6
(22) Date of filing: 01.07.1995
(51) Int. Cl.: H04N 7/087, H04N 7/088

(54) **Method to provide a subtitle in a teletext system**
Untertitelverfahren eines Teletext-Systems
Méthode pour obtenir un sous-titre dans un système de télétexte

(30) Priority: 12.07.1994 EP 94401627
(43) Date of publication of application: 17.01.1996
(73) Proprietor: DEUTSCHE THOMSON-BRANDT GMBH, 78048 Villingen-Schwenningen (DE)
(72) Inventor: Gyarmati, Sandor, D-78052 Villingen-Schwenningen (DE)

(56) References cited:
- EP-A- 0 239 760
- EP-A- 0 566 454
- EP-A- 0 578 300
- EP-A- 0 651 573
- EP-A- 0 744 866
- EBU REVIEW- TECHNICAL, no. 252, 1 January 1992, pages 45-49, XP000294770 AHL A: "EBU SUBTITLING DATA EXCHANGE STANDARD"
- ELECTRONIC COMPONENTS AND APPLICATIONS, vol. 10, no. 3, 1 January 1990, pages 102-120, XP000288520 KINGHORN J: "A NEW GENERATION OF WORLD SYSTEM TELETEXT ICS"

## Description

The present invention relates to a method to provide a subtitle in a teletext system for television receivers.

### Background

If many subtitle pages in the same channel are transmitted in order to support several languages, there is a demand to
- keep flexible assigning page numbers to languages
- provide to the user an easy way to request a subtitle page by selecting only the language name.
- enable intelligent decoder after channel change to find the previously selected subtitle pages simply by storing only the language number.

EP-A-0 578 300 discloses that a television receiver including a teletext decoder is adapted to search and display a teletext subtitling page in response to a display command supplied for this purpose. A table is composed in the receiver, which indicates for each page number whether the corresponding teletext pages are present in the transmission cycle and whether it is a subtitling page or not. If there are several subtitling pages, they can be selectively requested by repeatedly pressing a subtitle key.

EP-A-0 651 573, which is only relevant within the meaning of Article 54, paragraph 3, refers to a receiver of television signals comprising a teletext decoder evaluating the so-called Basic TOP Table. The Basic TOP Table contains the numbers of all the pages effectively present in the transmission cycle wherein the pages containing subtitles are marked by a particular byte. The bytes are detected by the teletext decoder and a command device equipped with a subtitles key allows access to a plurality of subtitled pages.

### Invention

It is one object of the invention to provide an improved method for subtitling in a teletext system. This object is reached by the methods disclosed in claim 1 or claim 6.

### Description of preferred embodiments :

All pages containing subtitling information in different languages, should be listed up in one or more tables called Initial Subtitle Table (IST).
The IST contains the *language name,* the *language number* and the *page number* to be requested for up to 15 languages, and can be displayed as a normal teletext page. The language number (1 to 15) can be stored as a channel parameter memorizing indirectly the appropriate subtitle-page number for each channel, making possible a very economic use of an EEPROM.
After channel change the page, carrying subtitle information in the desired language, will be requested automatically via the stored language number and referencing the IST page.
Any new subtitle language can be selected using the IST page and a simple user interface i.e. entering the displayed language number.
For the transmission of language number and page number an improved error detection method was implemented: two versions of the related digits the originals and the complements are transmitted. For coping with both the Eastern- and Western European languages, two different IST pages should be transmitted including each an individual list of languages.

### The IST-Pages

The IST page for Western Europe is defined, as code of praxis, to be transmitted under the page number $1F9,0000 or $1F9,3F7F and for Eastern Europe under the page number $1F8,0000 or $1F8,3F7F. Any further ISTs representing other language categories will have the page number 1F7, 1F6 ...and so on. All will include maximal 17 rows plus the header.

### Relationship between decoder-device and ISTs

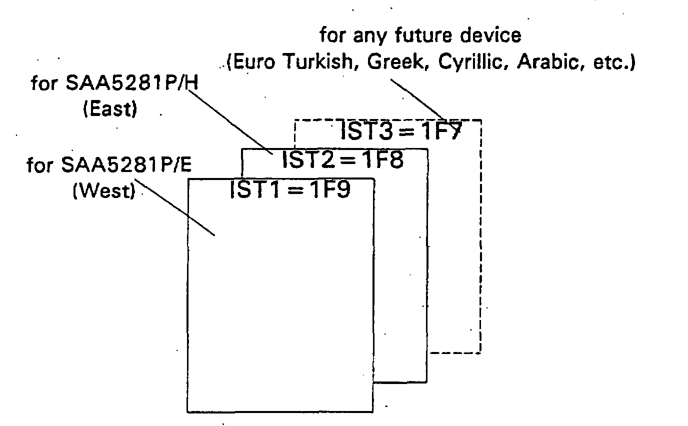

Receivers equipped with a decoder for Western Europe, will search only IST1 (1F9). Receivers equipped with a decoder for Eastern Europe, will search only IST2 (1F8). Future receivers equipped with a decoder for Western- and Eastern Europe, will search both IST1 (1F9) and IST2 (1F8).

### Construction of the IST-Page

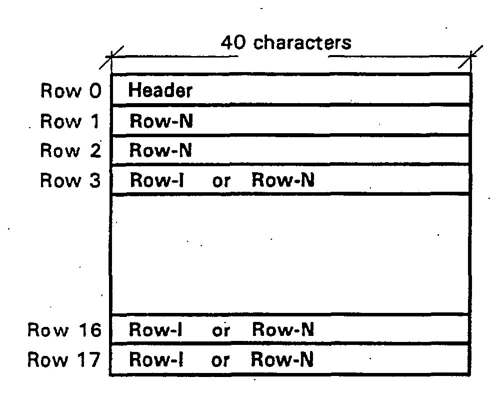

**Table1**

| **Elements of the IST page** | | |
|---|---|---|
| **Elements** | **Definition** | **Comments** |
| Header | As defined in WST. | Future ISTs will have the page numbers 1F7, 1F6, ... |
| | Page No.: 1F9 for West-Europe | |
| | Page No.: 1F8 for East Europe Sub-Codes always: 0000 or 3F7F | |
| ROW-I | Information row. | Can be transmitted as any row from row3 to row17 in single height. |
| | Carries subtitle information: Language No., Language name, Page No. | |
| Row-N | Normal row. | Used to fill unused rows with text/graphics or create a message or a common background color for the whole page. Can be transmitted as any row from row1 to row17 in single height. |
| | Any textual message or empty row. | |

### Recommendations:

a) Each row has to include two Box-On characters as part of the identification codes sequence (ID) providing the same conditions for IST display and for Sub-Titles in order to simplify the decoder hardware.
b) Row1 and Row2 are intended to be used for messages only (Row-N) telling to the user how to interpret the IST.
   **Row1** should indicate that the IST is actually to be used for **current** channel settings.
   **Row2** should indicate that the IST is actually to be used for **default** channel settings.
c) The headers of all IST pages have always to be suppressed. Control bit C7 set to 1.

### Construction of Row-I

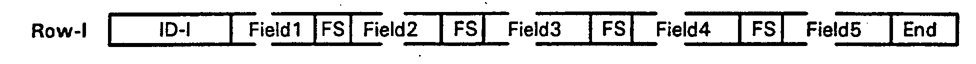

**Table 2**

| **Elements of Row-I** | | |
|---|---|---|
| **Elements** | **definitions** | **Comments** |
| Field 1 | Inverted Language number. Same information as in field 2 but inverted. | See table 6 for conversion. Spaces ($20) will be ignored by the decoder. |
| Field 2 | Language Number . Two digits of ASCII coded decimal numbers 01 to 15. | Spaces ($20) will be ignored by the decoder. |
| Field 3 | String for language name. ASCII code: $30 to $7F | Spaces ($20) will be ignored by the decoder. Will not be verified by the software |
| Field 4 | String for "YES" or " NO " | String can be placed anywhere in field 4. |
| | Starts always with a space ($20) enabling the software to write a conceal attribute in front of the string. | |
| | | The remaining part of the field is filled with spaces ($20) The string optically indicates the availability of a language in the current channel. |
| | | "YES" or "NO" will not be verified by the software, but will be concealed for default channel settings. |
| Field5 | The page number is placed in the last 6 character places of Row-I. | X= 1..8, Y= 0...9, Z= 0....9 Spaces ($20) will be ignored by the decoder. |
| | The first three digits are ASCII coded decimal numbers (XYZ) for page number followed by three digits representing the inverted page number. | |
| | | See table 6 for conversion |
| | Fixed field length : 6 digits | |
| ID-I | Identifier of Row-I. Exactly the sequences | See table 4 for coding |
| | + / b b + or | Identifies Row-I when occurs in row3 to row17. |
| | + / b b % | |
| | is required starting at the first column. | |
| FS | Field Separator | See table 4 for coding. |
| | + or % | Can be followed by additional control codes or sequences. If twice the same code for " + + " or " % % " is transmitted, the field separation is ignored by the decoder. See Table 5 |
| End | Termination code of row | See table 4 for coding Termination code of every row |
| | & & | |
| | is required at column 39 and 40 | |

### Recommendations:

For accelerating the decoder software, as code of praxis it is recommended to place individual fields in each Row-I at the same column.

### Construction of Row-N

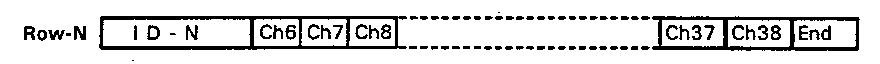

**Table 3**

| **Elements of Row-N** | | |
|---|---|---|
| **Element** | **Definition** | **Comments** |
| ID-N | Identifier of Row-N exactly the sequence: + / b b x is required starting at the 1st column | Identifies Row-N when occurs in row1 to row17. See table 4 for coding |
| Ch6-Ch38 | Any string of character or control code | |
| End | Termination code of Row & & is required at column 39 and 40 | See table 4 for coding Termination code of every Row |

### Recommendations:

Row1 and Row2 are intended to be used for messages (Row-N) telling to the user how to interpret the IST.
**Row1** should indicate that the IST is actually to be used for **current** channel settings.
**Row2** should indicate that the IST is actually to be used for **default** channel settings.

In Row-N don't use the control code BOX OFF (0A) between character 06 and character 38.

**Table 4**

| **Elements of FS (Field-Separator) and ID-I, ID-N (Identifiers)** | | |
|---|---|---|
| **Short form symbol** | **Meaning** | **Code in Teletext (hex)** |
| + | any alphanumeric color | 00 only if 1st column of ID ! 01,02,03,04,05,06,07 |
| / | new background | 1D |
| % | concealed display | 18 |
| x | steady | 09 |
| bb | Twice Box-On | 0B, 0B |
| & & | Twice Box Off | 0A, 0A |

**Table 5**

| **Decoder ignores FS (Field-Separation)** | | |
|---|---|---|
| **Short form symbol** | **Meaning** | **Code in Teletext (hex)** |
| + + | Twice the same alphanumeric color | 0101,0202,0303,0404,0505,0606 0707 |
| % % | Twice conceal | 18 18 |

**Table 6**

| **Code Conversion** | | | | | |
|---|---|---|---|---|---|
| **Display** | **ASCII** | **binary** | **binary Complement** | **ASCII Complement** | **Display Complement** |
| 0 | 30 | 011 0000 | 100 1111 | 4F | O |
| 1 | 31 | 011 0001 | 100 1110 | 4E | N |
| 2 | 32 | 011 0010 | 100 1101 | 4D | M |
| 3 | 33 | 011 0011 | 100 1100 | 4C | L |
| 4 | 34 | 011 0100 | 100 1011 | 4B | K |
| 5 | 35 | 011 0101 | 100 1010 | 4A | J |
| 6 | 36 | 011 0110 | 100 1001 | 49 | I |
| 7 | 37 | 011 0111 | 100 1000 | 48 | H |
| 8 | 38 | 011 1000 | 100 0111 | 47 | G |
| 9 | 39 | 011 1001 | 100 0110 | 46 | F |

### Example 1:

Row-I transmitted:
00 1D 0B 0B 18 **4F 48** 07 **20** **30 37** 07 **20** **45 4E 47 4C 49 53 48** **20 20** 07 **20 20 20 20** **59** **45 53** **20** 18 **32 31 30 4D 4E 4F** **0A 0A**

Interpretation in the decoder:
- 00 1D 0B 0B 18: Row-I identifier. Back ground = **black**
- **4F 48**: "OH" complement of "07"
- 07: Field separator. Foreground color = **white**
- **20 30 37**: Language number = "07" ($20 ignored)
- 07: Field separator. Foreground color = white
- **20 45 4E 47 4C 49 53 48 20 20**: String = "ENGLISH"
- 07: Field separator. Foreground color = **white**
- **20 20 20 20 59 45 53 20**: string = "YES"
- 18: Field separator = **conceal**
- **32 31 30 4D 4E 4F**: Page number = "210" and inverted page number = "MNO"
- 0A 0A: Termination code of Row = Box off, Box off

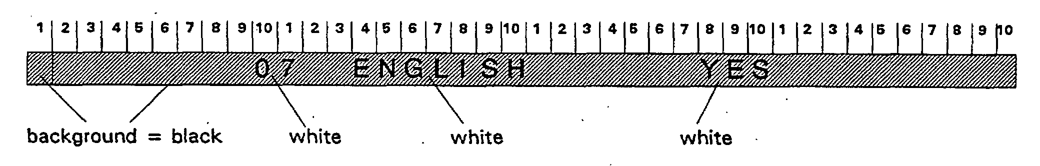

## Claims

1. Method for providing subtitling in a desired language for a television receiver, wherein subtitle pages according to a teletext standard are received and wherein the page numbers of the subtitle pages containing subtitling in different languages are listed up in one or more subtitle tables, **characterized by** the steps: receiving the subtitle tables comprising as indication of the language of the respective subtitle pages as teletext signal according to a teletext standard, selecting a subtitle page in the desired language using said subtitle table and said indication of the language.

2. Method according to claim 1, **characterised in that** the subtitle table comprises the language name, the language number and the page number to be requested for up to 15 languages, and can be displayed as a normal teletext page.

3. Method according to claim 1 or 2, **characterised in that** the language number can be stored as a channel parameter memorizing indirectly the appropriate subtitle page number for each channel, making possible a very economic use of an EEPROM in the receiving device.

4. Method according to any of claim 1 to 3, **characterised in that** after channel change the page, carrying subtitle information in the desired language, will be requested automatically via the stored language number and referencing the subtitle table page.

5. Method according to any of claim 1 to 4, **characterised in that** a new subtitle language can be selected using the subtitle table page and a user interface by entering the language number.

6. Method for transmitting subtitle pages in different languages, wherein the subtitle pages are transmitted as teletext signal according to a teletext standard **characterised in that** one or more subtitle tables are transmitted as teletext signal according to a teletext standard, wherein the page numbers of the subtitle pages containing subtitling in different languages are listed up in the subtitle tables and wherein the subtitle tables comprise an indication of the language of the respective subtitle pages.

7. Method according to claim 6, **characterised in that** for the transmission of a language number and a page number two versions of the related digits, the originals and the complements, are transmitted.

8. Method according to claim 6 or 7, **characterised in that** for coping with both the Eastern- and Western European languages, two different subtitle table pages are transmitted including each an individual list of languages.

9. Method according to any of claims 6 to 8, **characterised in that** the subtitle table page for Western Europe is transmitted under the page number $1F9,0000 or $1F9,3F7F and for Eastern Europe under the page number $1F8,0000 or $1F8,3F7F.

10. Method according to any of claims 6 to 9, **characterised in that** further subtitle tables representing other language categories will have the page number 1F7, 1F6 ...and so on.

## Patentansprüche

1. Verfahren zur Erzeugung von Untertiteln in einer gewünschten Sprache für einen Fernsehempfänger, bei dem Untertitel-Seiten gemäß einer Teletext-Norm empfangen werden, und bei dem die Seitenzahlen der Untertitel-Seiten, die eine Untertitelung in verschiedenen Sprachen enthalten, in einer oder mehreren Untertitel-Tabellen aufgelistet sind, **gekennzeichnet durch** die Schritte: Empfangen der Untertitel-Tabellen, die eine Anzeige der Sprache der entsprechenden Untertitel-Seiten umfassen als Teletext-Signal gemäß einer Teletext-Norm, Auswahl einer Untertitel-Seite in der gewünschten Sprache unter Verwendung der Untertitel-Tabelle und der Anzeige der Sprache.

2. Verfahren nach Anspruch 1, **dadurch gekennzeichnet, daß** die Untertitel-Tabelle den angeforderten Sprachen-Namen, die Sprachen-Nummer und die Seiten-Nummer bis zu 15 Sprachen umfaßt und als normale Teletext-Seite angezeigt werden kann.

3. Verfahren nach Anspruch 1 oder 2, **dadurch gekennzeichnet, daß** die Sprachen-Nummer als Kanal-Parameter gespeichert werden kann, der indirekt die geeignete Untertitel-Seiten-Nummer für jeden Kanal speichert, wodurch eine sehr wirtschaftliche Verwendung eines EEPROM in der Empfangsvorrichtung ermöglicht wird.

4. Verfahren nach einem der Ansprüche 1 bis 3, **dadurch gekennzeichnet, daß** nach dem Kanalwechsel die Seite, die die Untertitel-Information in der gewünschten Sprache enthält, automatisch über die gespeicherte Sprachen-Nummer und unter Bezugnahme auf die Untertitel-Tabellen-Seite angefordert wid.

5. Verfahren nach einem der Ansprüche 1 bis 4, **dadurch gekennzeichnet, daß** eine neue Untertitel-Sprache unter Verwendung der Untertitel-Tabellen-Seite und einer Benutzer-Schnittstelle durch Eingeben der Sprachen-Nummer ausgewählt werden kann.

6. Verfahren zur Übertragung von Untertitel-Seiten in verschiedenen Sprachen, wobei die Untertitel-Seiten als Teletext-Signal gemäß einer Teletext-Norm übertragen werden, **dadurch gekennzeichnet, daß** ein oder mehrere Untertitel-Tabellen als Teletext-Signal gemäß einer Teletext-Norm übertragen werden, wobei die Seiten-Nummern der Untertitel-Seiten, die Untertitel in unterschiedlichen Sprachen enthalten, in den Untertitel-Tabellen aufgelistet sind, und wobei die Untertitel-Tabellen eine Anzeige der Sprache der entsprechenden Untertitel-Seiten umfassen.

7. Verfahren nach Anspruch 6, **dadurch gekennzeichnet, daß** für die Übertragung einer Sprachen-Nummer und einer Seiten-Nummer zwei Versionen der betroffenen Ziffern, die Originale und die Komplemente, übertragen werden.

8. Verfahren nach Anspruch 6 oder 7, **dadurch gekennzeichnet, daß** im Wetteifern mit den ost- und west-europäischen Sprachen zwei unterschiedliche Untertitel-Tabellen-Seiten übertragen werden, die jeweils eine individuelle Liste von Sprachen einschließen.

9. Verfahren nach einem der Ansprüche 6 bis 8, **dadurch gekennzeichnet, daß** die Untertitel-Seite für West-Europa unter der Seiten-Nummer $1F9, 0000 oder $1F9, 3F7F und für Ost-Europa unter der Seiten-Nummer $1F8, 0000 oder $1F8, 3F7F übertragen wird.

10. Verfahren nach einem der Ansprüche 6 bis 9, **dadurch gekennzeichnet, daß** weitere Untertitel-Tabellen, die andere Sprach-Kategorien darstellen, die Seiten-Nummern 1F7, 1F6 ... und so weiter haben.

## Revendications

1. Procédé pour fournir un sous-titrage dans une langue désirée pour un récepteur de télévision, dans lequel les pages de sous-titres conformément à un standard de télétexte sont reçues et dans lequel les numéros de page des pages de sous-titres contenant un sous-titrage dans des langues différentes sont énumérés dans un ou plusieurs tableaux de sous-titres, **caractérisé par** les étapes de :
réception des tableaux de sous-titres comprenant une indication de la langue des pages de sous-titres respectives comme signal de télétexte conformément à un standard de télétexte,
sélection d'une page de sous-titre dans la langue désirée en utilisant ledit tableau de sous-titres et ladite indication de la langue.

2. Procédé selon la revendication 1, **caractérisé en ce que** le tableau de sous-titres comprend le nom de la langue, le numéro de la langue et le numéro de page à demander pour un maximum de 15 langues, et peut être affiché comme page de télétexte normale.

3. Procédé selon la revendication 1 ou 2, **caractérisé en ce que** le numéro de la langue peut être stocké comme paramètre de canal mémorisant indirectement le numéro de page de sous-titre approprié pour chaque canal, permettant une utilisation très économique d'une EEPROM dans le dispositif récepteur.

4. Procédé selon l'une quelconque des revendications 1 à 3, **caractérisé en ce qu'**après chaque changement de canal, la page portant des informations de sous-titre dans la langue désirée sera demandée automatiquement au moyen du numéro de langue stocké et en référence à la page de tableau de sous-titres.

5. Procédé selon l'une quelconque des revendications 1 à 4, **caractérisé en ce qu'**une nouvelle langue de sous-titres peut être sélectionnée au moyen de la page de tableau de sous-titres et d'une interface d'utilisateur en entrant le numéro de la langue.

6. Procédé pour transmettre des pages de sous-titres dans des langues différentes, dans lequel les pages de sous-titres sont transmises comme signal de télétexte conformément à un standard de télétexte, **caractérisé en ce qu'**un ou plusieurs tableaux de sous-titres sont transmis sous forme de signal télétexte conformément à un standard de télétexte, dans lequel les numéros de page des pages de sous-titres contenant un sous-titrage dans différentes langues sont énumérés dans les tableaux de sous-titres et dans lequel les tableaux de sous-titres comprennent une indication de la langue des pages de sous-titres respectives.

7. Procédé selon la revendication 6, **caractérisé en ce que** pour la transmission d'un numéro de langue et d'un numéro de page, deux versions des chiffres associés, les originaux et les compléments, sont transmises.

8. Procédé selon la revendication 6 ou 7, **caractérisé en ce que** pour traiter les langues à la fois d'Europe de l'Est et d'Europe de l'Ouest, deux pages de tableaux de sous-titres différentes sont transmises comportant chacune une liste individuelle de langues.

9. Procédé selon l'une quelconque des revendications 6 à 8, **caractérisé en ce que** la page de tableau de sous-titres pour l'Europe de l'Ouest est transmise sous le numéro de page $1F9,0000 ou $1F9,3F7F et pour l'Europe de l'Est sous le numéro de page $1F8,0000 ou $1F8,3F7F.

10. Procédé selon l'une quelconque des revendications 6 à 9, **caractérisé en ce que** d'autres tableaux de sous-titres représentant d'autres catégories de langues auront le numéro de page 1F7, 1F6 .. et ainsi de suite.
